# EUROPÄISCHE PATENTSCHRIFT

(11) **EP 2 820 728 B1**
(45) Veröffentlichungstag und Bekanntmachung des Hinweises auf die Patenterteilung: **21.11.2018**
(21) Anmeldenummer: 13707150.2
(22) Anmeldetag: 26.02.2013
(51) Int. Cl.: H01T 15/00, H01T 2/00

(54) **FUNKENSTRECKENANORDNUNG**
SPARK GAP ARRANGEMENT
DISPOSITIF ÉCLATEUR

(30) Priorität: 27.02.2012 DE 102012101558
(43) Veröffentlichungstag der Anmeldung: 07.01.2015
(73) Patentinhaber: TDK Electronics AG, 81671 München (DE)
(72) Erfinder: BOBERT, Peter, 14612 Falkensee (DE)
(74) Vertreter: Epping - Hermann - Fischer
(86) Internationale Anmeldenummer: PCT/EP2013/053814
(87) Internationale Veröffentlichungsnummer: WO 2013/127788

(56) Entgegenhaltungen:
- FR-A1- 2 317 804

## Beschreibung

Die Erfindung betrifft eine Funkenstreckenanordnung mit einer triggerbaren Funkenstrecke.

Herkömmliche triggerbare Funkenstrecken weisen üblicherweise wenigstens zwei Hauptelektroden und eine Triggerelektrode auf. Beispielsweise sind die Elektroden in einem gasgefüllten Raum angeordnet, wobei durch Anlegen einer entsprechenden Triggerspannung an die Triggerelektrode eine Funkenstrecke zwischen der Triggerelektrode und einer der Hauptelektroden gezündet wird. Beispielsweise entsteht dabei in dem gasgefüllten Raum eine ionisierte Strecke, über die ein Strom zwischen der Triggerelektrode und der einen Hauptelektrode fließt. Durch die Zündung mittels der Triggerelektrode wird dann erreicht, dass sich ein weiterer leitender Kanal zwischen den beiden Hauptelektroden ausbildet, sodass ein Stromfluss zwischen den Hauptelektroden möglich wird.

Solche triggerbaren Funkenstrecken können beispielsweise als Überspannungsableiter verwendet werden. Eine andere Anwendungsmöglichkeit besteht beispielsweise in der gezielten Durchschaltung von Hochspannungen.

Bei herkömmlichen triggerbaren Funkenstrecken wird das Durchschalten zwischen den Hauptelektroden unmittelbar mit dem Anlegen des Triggerimpulses an die Triggerelektrode ausgelöst. Das Dokument FR 2 317 804 A1 offenbart den nächstliegenden Stand der Technik und betrifft ein elektrisches Zündsystem mit einem Entladeschaltkreis. In einer Ausführungsform ist ein Kondensator zwischen Anschlussklemmen einer Gleichspannungsquelle geschaltet. Zudem sind die Hauptelektroden einer Zündkerze mit den Anschlüssen dieses Kondensators verbunden. Eine Gasentladungsröhre ist in Serie mit einem Widerstand parallel zu dem Kondensator geschaltet. Zudem ist parallel zu der Gasentladungsröhre ein weiterer Kondensator in Serie mit einer Primärwicklung eines Transformators geschaltet. Eine Sekundärwindung dieses Transformators verbindet eine Triggerelektrode der Zündkerze mit dem Masseanschluss. Im Betrieb der Anordnung wird die Gasentladungsröhre gezündet, wenn der an die Primärwindung angeschlossene Kondensator die zur Zündung der Gasentladungsröhre kritische Spannung überschreitet. Durch die darauffolgende Entladung des weiteren Kondensators wird ein Zündimpuls für die Zündkerze erzeugt, was wiederum zu einer Entladung des ersten Kondensators über die Hauptelektroden der Zündkerze führt.

Eine zu lösende Aufgabe besteht darin, eine Funkenstreckenanordnung mit einer triggerbaren Funkenstrecke anzugeben, bei der ein Auslösen der triggerbaren Funkenstrecke mit einer vorgegebenen Verzögerung, insbesondere einer manipulationssicheren Verzögerung, erfolgt.

Diese Aufgabe wird mit dem Gegenstand des unabhängigen Patentanspruchs erfüllt. Weiterbildungen und Ausgestaltungsformen sind Gegenstand der abhängigen Ansprüche.

Beispielsweise wird hierfür in der Funkenstreckenanordnung eine Triggerschaltung vorgesehen, welche einen eingangsseitig anliegenden Impuls in verzögerter Form zur Ansteuerung der triggerbaren Funkenstrecke verwendet. Dazu wird beispielsweise eine Energie des eingangsseitig anliegenden Impulses in wenigstens einem Speicher zwischengespeichert. Die zwischengespeicherte Energie wird mit einer vorgegebenen Zeitkonstante auf einen weiteren Speicher umgeladen. Wenn durch den Umladevorgang mit der Zeitkonstante auf den weiteren Speicher ein bestimmter Ladezustand erreicht wird, wird durch diesen Ladezustand ein Durchschalten beziehungsweise Entladen des wenigstens einen Speichers ausgelöst, wobei diese Entladung pulsförmig erfolgt. Dieser Entladungspuls wird beispielsweise mittels eines Transformators auf die Triggerelektrode der triggerbaren Funkenstrecke geführt, um diese entsprechend zeitverzögert zum Auslösen zu bringen. Beispielsweise ist die Triggerschaltung in ein Gehäuse der triggerbaren Funkenstrecke integriert. Zudem ist beispielsweise der Triggeranschluss der triggerbaren Funkenstrecke nicht von außen kontaktierbar, sodass eine Triggerung nur über die Triggerschaltung verzögert möglich ist.

In einer Ausführungsform umfasst die Triggerschaltung einen ersten und einen zweiten Ladungsspeicher, einen ersten Widerstand, ein triggerbares Ableitelement und einen Transformator. Die Triggerschaltung ist dabei eingerichtet, die Energie eines der Triggerschaltung eingangsseitig zugeführten Eingangsimpulses zwischenzuspeichern, wobei eine Speicherung wenigstens durch den ersten Ladungsspeicher erfolgt. Zudem ist die Triggerschaltung eingerichtet, einen Teil der gespeicherten Energie über den ersten Widerstand auf den zweiten Ladungsspeicher umzuladen. Das triggerbare Ableitelement ist eingerichtet, in Abhängigkeit einer Spannung über dem zweiten Ladungsspeicher durchzuschalten und den ersten Ladungsspeicher über eine Primärseite des Transformators zu entladen. Eine Sekundärseite des Transformators ist mit einer Hauptelektrode der triggerbaren Funkenstrecke und einer Triggerelektrode der triggerbaren Funkenstrecke verbunden.

Das triggerbare Ableitelement, das beispielsweise durch eine Schaltfunkenstrecke, einen Dreielektrodenableiter oder einen Thyristor mit Triggerdiode gebildet ist, weist beispielsweise eine entsprechende Durchschaltspannung auf, und schaltet durch, wenn die Spannung über dem zweiten Ladungsspeicher diese Durchschaltspannung erreicht. Der eingangsseitig anliegende Impuls wird dementsprechend zur Aufladung des ersten Ladungsspeichers verwendet, wobei die Aufladung direkt beziehungsweise unmittelbar oder aber indirekt, durch Zwischenspeicherung auf einem weiteren Ladungsspeicher erfolgt. Die Energie des Impulses ist somit in der Triggerschaltung nach Abklingen des Eingangsimpulses zwischengespeichert und wird verwendet, um den zweiten Ladungsspeicher aufzuladen, wobei durch die Entladung des Zwischenspeichers über den Widerstand eine Zeitkonstante resultiert. Die Spannung über dem zweiten Ladungsspeicher steigt mit der entsprechenden Zeitkonstante an, bis die Durchschaltspannung erreicht ist. Beim Durchschalten des triggerbaren Ableitelements wird der erste Ladungsspeicher niederohmig überbrückt, wobei der erste Ladungsspeicher beispielsweise in Serie mit einer Primärwicklung des Transformators geschaltet ist. Dementsprechend wird im Transformator durch die Entladung des ersten Ladungsspeichers ein Impuls induziert, welcher letztendlich das Auslösen der triggerbaren Funkenstrecke bewirkt.

In verschiedenen Ausführungsformen ist ein weiterer Widerstand parallel zum zweiten Ladungsspeicher geschaltet. Dadurch kann der zweite Ladungsspeicher im Betrieb der Anordnung regelmäßig entladen werden, sodass bei Auftreten eines Eingangsimpulses keine Vorladung auf dem zweiten Ladungsspeicher vorhanden ist. Dadurch wird zusätzlich verhindert, dass eine Spannung über dem zweiten Ladungsspeicher schneller die Durchschaltspannung des triggerbaren Ableitelements erreicht als aufgrund der Dimensionierung insbesondere des ersten Widerstands und des zweiten Ladungsspeichers vorgesehen beziehungsweise beabsichtigt ist. Der weitere Widerstand ist vorzugsweise derart dimensioniert, dass beim Umladen der Energie auf den zweiten Ladungsspeicher nur geringe Ströme über dem weiteren Widerstand auftreten und die als Ladung zwischengespeicherte Energie auf den zweiten Ladungsspeicher umgeladen werden kann.

In verschiedenen weiteren Ausführungsformen weist die Triggerschaltung eine Gleichrichterschaltung auf, die eingerichtet ist, die Speicherung der Energie des Eingangsimpulses auf der Basis einer positiven Halbwelle und/oder einer negativen Halbwelle des Eingangsimpulses zu ermöglichen. Dementsprechend kann der Gleichrichter sowohl als Einweggleichrichter, der nur eine Halbwelle des Eingangsimpulses durchlässt und die andere Halbwelle kurzschließt, aber auch als Zweiweggleichrichter ausgeführt sein, der sowohl die positive als auch die negative Halbwelle eines Eingangsimpulses zur Speicherung der Energie zur Verfügung stellt.

In verschiedenen Ausführungsformen ist der Transformator als Hochspannungstransformator ausgeführt. Beispielsweise werden die Ladungsspeicher aufgrund des Eingangsimpulses auf ein höheres Spannungsniveau, beispielsweise im Bereich von 400 V aufgeladen, welches durch den Hochspannungstransformator auf eine Zündspannung im Bereich von 10 kV für die triggerbare Funkenstrecke hochtransformiert wird.

In weiteren Ausführungsformen umfasst die Funkenstreckenanordnung ferner einen weiteren Transformator, der eingerichtet ist, den Eingangsimpuls aus einem primärseitig am weiteren Transformator anliegenden Impuls zu erzeugen. Beispielsweise ist dazu die Triggerschaltung an die Sekundärseite des weiteren Transformators angeschlossen. An die Primärseite des weiteren Transformators kann in dieser Ausführungsform ein Impuls angelegt werden, welcher über den weiteren Transformator zum Eingangsimpuls umtransformiert wird.

In verschiedenen Ausführungsformen ist die triggerbare Funkenstrecke eine Gasentladungsfunkenstrecke oder ein gasgefüllter elektrischer Überspannungsableiter.

Wie zuvor erläutert, kann durch die Dimensionierung der Bauteile der Triggerschaltung ein zeitliches Verhalten der Triggerschaltung vorgegeben werden, insbesondere durch die spezielle Gestaltung der Zeitkonstanten. Beispielsweise ist dementsprechend die Triggerschaltung derart dimensioniert, dass eine Zeitspanne zwischen einem Auftreten des Eingangsimpulses und dem Durchschalten der Schaltfunkenstrecke immer größer als ein vorgegebener Wert, insbesondere größer als 15 µs ist. Dementsprechend kann eine manipulationssichere Funkenstreckenanordnung zur Verfügung gestellt werden.

In einer besonderen Ausführungsform der Funkenstreckenanordnung erfolgt die Speicherung der Energie des Eingangsimpulses ausschließlich durch den ersten Ladungsspeicher. Dabei ist die Triggerschaltung eingerichtet, den ersten Ladungsspeicher über den ersten Widerstand teilweise zu entladen, um den zweiten Ladungsspeicher aufzuladen. Insbesondere wird hierbei der erste Ladungsspeicher unmittelbar durch den Eingangsimpuls aufgeladen, das heißt, der vom Eingangsimpuls erzeugte Strom beziehungsweise die entsprechende Spannung wird direkt zur Aufladung des ersten Ladungsspeichers verwendet.

Nach Abklingen des Eingangsimpulses liegt somit eine Spannung über dem ersten Ladungsspeicher an. Ein Teil der gespeicherten Energie aus dem ersten Ladungsspeicher wird über den ersten Widerstand auf den zweiten Ladungsspeicher umgeladen, sodass die Spannung über dem zweiten Ladungsspeicher entsprechend der resultierenden Zeitkonstante ansteigt. Der erste und der zweite Ladungsspeicher sind dabei vorzugsweise derart aufeinander abgestimmt dimensioniert, dass durch die Umladung von Energie vom ersten Ladungsspeicher auf den zweiten Ladungsspeicher die Spannung über dem ersten Ladungsspeicher nur geringfügig abfällt, sodass eine ausreichende Spannung beim Durchschalten des Ableitelements vorhanden ist, welche eine Zündung der triggerbaren Funkenstrecke ermöglicht. Beispielsweise weist der erste Ladungsspeicher eine 50- bis 100-mal größere Kapazität als der zweite Ladungsspeicher auf.

Beispielsweise weist das triggerbare Ableitelement in dieser Ausführungsform eine Triggerdiode und einen Thyristor auf, wobei die Triggerdiode eingerichtet ist, den Thyristor in Abhängigkeit der Spannung über dem zweiten Ladungsspeicher leitend zu schalten. Wenn also die Spannung über dem zweiten Ladungsspeicher die Durchschaltspannung erreicht, wird die Triggerdiode in einen leitenden Zustand überführt, sodass ein Steuerstrom auf die Steuerelektrode des Thyristors geführt wird, um diesen zu zünden beziehungsweise leitend zu schalten. Der Thyristor ist dabei mit dem ersten Ladungsspeicher so verschaltet, dass eine Entladung über die Primärseite des Transformators erfolgt.

In einer weiteren besonderen Ausführungsform umfasst die Triggerschaltung ferner einen dritten Ladungsspeicher. Dabei erfolgt die Speicherung der Energie des Eingangsimpulses durch den ersten Ladungsspeicher und den dritten Ladungsspeicher. Vorzugsweise ist die Triggerschaltung dabei eingerichtet, den ersten Ladungsspeicher und den dritten Ladungsspeicher direkt durch den Eingangsimpuls aufzuladen, also den Strom beziehungsweise die Spannung, die aus dem Eingangsimpuls resultiert, zur Ladung des ersten und des dritten Ladungsspeichers zu verwenden. Die Triggerschaltung ist in dieser Ausführungsform eingerichtet, den dritten Ladungsspeicher über den ersten Widerstand zu entladen, um den zweiten Ladungsspeicher aufzuladen.

Die Energie des Eingangsimpulses wird somit im ersten und dritten Ladungsspeicher gespeichert, wobei die in dem ersten Ladungsspeicher gespeicherte Energie für die Entladung über das Ableitelement verwendet wird, während die Energie auf dem dritten Ladungsspeicher verwendet wird, um mit der entsprechenden Zeitkonstante den zweiten Ladungsspeicher aufzuladen und somit die Spannung über dem zweiten Ladungsspeicher ansteigen zu lassen.

Beispielsweise ist diese Ausführungsform der Triggerschaltung eingerichtet, eine Aufladung des ersten und des dritten Ladungsspeichers über eine jeweils zu dem ersten und dem dritten Ladungsspeicher in Serie geschaltete Diode durchzuführen. Vorzugsweise ist dabei eine Kathode der jeweiligen Diode mit dem Ladungsspeicher verbunden. Dadurch wird ein Umladen zwischen dem ersten und dem dritten Ladungsspeicher verhindert. Beispielsweise sind der erste und der dritte Ladungsspeicher so dimensioniert, dass der erste Ladungsspeicher einen deutlich größeren Kapazitätswert aufweist als der dritte Ladungsspeicher, beispielsweise um einen Faktor 100 bis 500 Mal größer.

Das triggerbare Ableitelement umfasst bei dieser Ausführungsform beispielsweise einen Dreielektrodenableiter, bei dem eine Mittelelektrode zum Durchschalten des Dreielektrodenableiters in Abhängigkeit der Spannung über dem zweiten Ladungsspeicher eingerichtet ist. Die Durchschaltspannung des Ableitelements bestimmt sich demnach über die vorgegebene Schaltspannung des Dreielektrodenableiters zwischen der Au-ßenelektrode, die mit dem zweiten Ladungsspeicher verbunden ist, und der Mittelelektrode. Der erste Ladungsspeicher ist beispielsweise an die weitere Außenelektrode angeschlossen, sodass bei einem Durchzünden der Strecke zwischen dem zweiten Ladungsspeicher und der Mittelelektrode der gesamte Dreielektrodenableiter leitfähig wird und ein Strompfad für den ersten Ladungsspeicher über die Mittelelektrode und die Primärseite des Transformators gebildet wird.

In einer weiteren besonderen Ausführungsform weist die Triggerschaltung ferner einen dritten und einen vierten Ladungsspeicher sowie einen zweiten Widerstand auf, wobei die Speicherung der Energie des Eingangsimpulses direkt durch den dritten und den vierten Ladungsspeicher erfolgt. Die Triggerschaltung ist eingerichtet, den dritten Ladungsspeicher über den ersten Widerstand zu entladen, um den zweiten Ladungsspeicher aufzuladen, und den vierten Ladungsspeicher über den zweiten Widerstand zu entladen, um den ersten Ladungsspeicher aufzuladen. Dementsprechend erfolgt auch bei dieser Ausführungsform eine Speicherung der Energie des Eingangsimpulses durch den ersten Ladungsspeicher und den dritten Ladungsspeicher.

Der eingangsseitig anliegende Impuls wird aber bei dieser Ausführungsform zur unmittelbaren Aufladung des dritten und des vierten Ladungsspeichers verwendet, sodass nach Abklingen des Eingangsimpulses eine bestimmte Spannung über dem dritten beziehungsweise vierten Ladungsspeicher anliegt. Diese Spannungen entladen sich über den ersten beziehungsweise zweiten Widerstand auf den ersten beziehungsweise zweiten Ladungsspeicher, wobei durch die Entladung über die Widerstände jeweilige Zeitkonstanten resultieren, ähnlich wie zuvor beschrieben. Der erste Ladungsspeicher wird hierbei vorzugsweise auf eine Maximalspannung aufgeladen, welche unterhalb der Durchschaltspannung des triggerbaren Ableitelements liegt. Das triggerbare Ableitelement ist in dieser Ausführungsform beispielsweise als Schaltfunkenstrecke ausgeführt, die zum Durchschalten in Abhängigkeit der Spannung über dem zweiten Ladungsspeicher eingerichtet ist. Diese Spannung über dem zweiten Ladungsspeicher steigt mit der entsprechenden Zeitkonstante an, bis die Durchschaltspannung erreicht ist. Beim Durchschalten des Ableitelements werden der erste und der zweite Ladungsspeicher niederohmig überbrückt. Dementsprechend wird im Transformator durch die Entladung des ersten Ladungsspeichers ein Impuls induziert, welcher letztendlich das Auslösen der triggerbaren Funkenstrecke bewirkt. Beispielsweise weist der vierte Ladungsspeicher eine größere Kapazität als der dritte Ladungsspeicher auf. Zudem weist der erste Ladungsspeicher beispielsweise eine größere Kapazität als der zweite Ladungsspeicher auf. Damit lassen sich auf dem vierten beziehungsweise ersten Ladungsspeicher größere Ladungsmengen als auf dem zweiten beziehungsweise dritten Ladungsspeicher speichern. Die kleineren Ladungsspeicher dienen beispielsweise zur Realisierung der Zeitverzögerung, während die größeren Ladungsspeicher zur Erzeugung des Impulses dienen, welcher zur Auslösung der triggerbaren Funkenstrecke führt. Beispielsweise ist die Kapazität des vierten Ladungsspeichers um einen Faktor zwischen 5 und 20, insbesondere um 10 herum, größer als die des dritten Ladungsspeichers. In ähnlicher Weise ist beispielsweise die Kapazität des ersten Ladungsspeichers um einen Faktor zwischen 30 und 70, insbesondere um 50 herum, größer als die des zweiten Ladungsspeichers. Auch die Widerstandswerte des ersten Widerstands und des zweiten Widerstands können sich unterscheiden. Beispielsweise ist ein Widerstandswert des ersten Widerstands größer als ein Widerstandswert des zweiten Widerstands, insbesondere um einen Faktor zwischen 30 und 70, beispielsweise um 50 herum.

Die Erfindung wird nachfolgend an mehreren Ausführungsbeispielen anhand von Figuren näher erläutert. Gleiche Bezugszeichen kennzeichnen hierbei Elemente oder Bauteile gleicher Funktion. Soweit sich Elemente oder Bauteile in ihrer Funktion entsprechen, wird deren Beschreibung nicht in jeder der folgenden Figuren wiederholt.

Es zeigen:
- Figur 1: ein Blockschaltbild einer Ausführungsform einer Funkenstreckenanordnung mit einer triggerbaren Funkenstrecke und einer Triggerschaltung,
- Figur 2: ein Blockschaltbild einer weiteren Ausführungsform einer Funkenstreckenanordnung mit einer triggerbaren Funkenstrecke und einer Triggerschaltung, und
- Figur 3: ein Blockschaltbild einer weiteren Ausführungsform einer Funkenstreckenanordnung mit einer triggerbaren Funkenstrecke und einer Triggerschaltung.

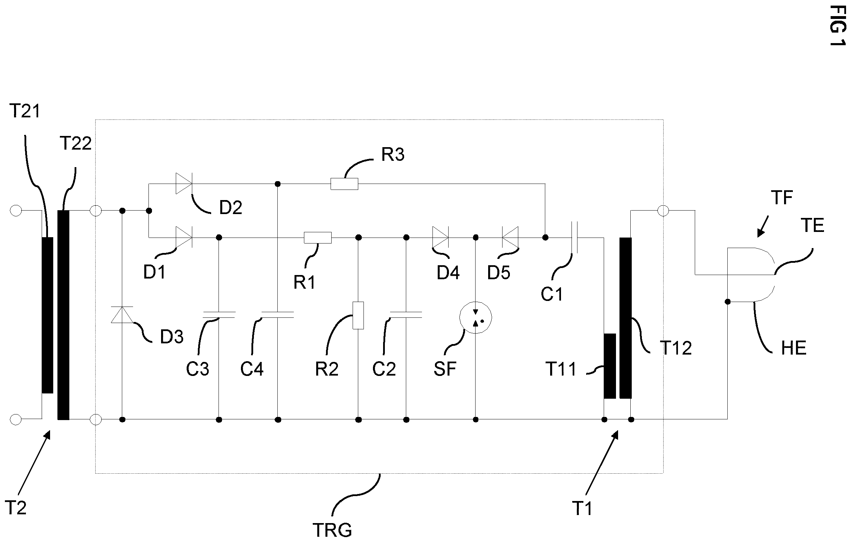

In den Blockschaltbildern der Figuren 1 bis 3 ist jeweils eine Triggerschaltung TRG dargestellt, bei der auf der linken Eingangsseite ein Transformator T2 mit einer Primärwicklung T21 und einer Sekundärwicklung T22 angeschlossen ist, wobei die Eingangsanschlüsse der Triggerschaltung TRG mit der Sekundärwicklung T22 verbunden sind. Ausgangsseitig ist an die Triggerschaltung TRG eine triggerbare Funkenstrecke TF, beispielsweise eine Gasentladungsfunkenstrecke oder ein gasgefüllter elektrischer Überspannungsableiter, mit einer Hauptelektrode HE und einer Triggerelektrode TE angeschlossen. Eine weitere Hauptelektrode der triggerbaren Funkenstrecke TF ist aus Übersichtsgründen nicht dargestellt. Die Funkenstrecke TF ist an die Sekundärseite T12 eines Hochspannungstransformators T1 angeschlossen, der von der Triggerschaltung TRG umfasst ist. Eine Primärwicklung T11 des Hochspannungstransformators T1 ist kleiner dargestellt als die entsprechende Sekundärwicklung T12, um auszudrücken, dass durch den Hochspannungstransformator T1 vorzugsweise eine Hochtransformation zwischen Primärseite T11 und Sekundärseite T12 des Transformators T1 durchgeführt wird.

Bezug nehmend auf Figur 1 ist in der Triggerschaltung TRG zwischen die Eingangsanschlüsse der Triggerschaltung TRG eine Serienschaltung aus einer ersten Diode D1 und eines Ladungsspeichers C3 geschaltet. In ähnlicher Weise ist zwischen die Eingangsanschlüsse eine Serienschaltung einer zweiten Diode D2 und eines Ladungsspeichers C4 geschaltet. Jeweils ein Knotenpunkt zwischen dem Ladungsspeicher C3, C4 und der Diode D1, D2 ist durch die Kathode der jeweiligen Diode gebildet. Antiparallel zu diesen beiden Serienschaltungen ist eine dritte Diode D3 zwischen die Eingangsanschlüsse geschaltet, sodass die Kathode der Diode D3 mit dem positiven, oberen Eingangsanschluss und die Anode mit dem unteren, negativen Eingangsanschluss verbunden ist. An den Knotenpunkt zwischen der ersten beziehungsweise zweiten Diode D1, D2 und dem jeweiligen Ladungsspeicher C3, C4 sind ein erster beziehungsweise zweiter Widerstand R1, R3 angeschlossen, die den jeweiligen Knoten mit jeweils einer Anode einer vierten und einer fünften Diode D4, D5 verbinden. Die Dioden D4, D5 sind kathodenseitig miteinander verbunden und führen auf einen Anschluss einer Schaltfunkenstrecke SF, deren anderer Anschluss mit dem negativen Eingangsanschluss verbunden ist. Zwischen dem Knotenpunkt zwischen dem ersten Widerstand R1 und der vierten Diode D4 und dem negativen Eingangsanschluss sind parallel zueinander ein dritter Widerstand R2 und ein Ladungsspeicher C2 angeschlossen. In ähnlicher Weise ist ein Ladungsspeicher C1 zwischen dem Knotenpunkt zwischen der Diode D5 und dem Widerstand R3 über die Primärwicklung T11 des Transformators T1 an den negativen Eingangsanschluss angeschlossen.

Im Betrieb der Funkenstreckenanordnung wird beispielsweise auf der Primärseite T21 des Transformators T2 ein Impuls angelegt, der auf der Sekundärseite T22 einen Eingangsimpuls induziert. Dieser weist beispielsweise lediglich eine einzelne Schwingungsperiode mit einer positiven und einer negativen Halbwelle auf. Die negative Halbwelle wird über die Diode D3 kurzgeschlossen, während die positive Halbwelle über die Dioden D1, D2 zur unmittelbaren Aufladung der beispielsweise als Kondensatoren ausgeführten Ladungsspeicher C3, C4 führt. Nach Ende des Eingangsimpulses entladen sich die Ladungsspeicher C3, C4 über die Widerstände R1, R3 auf die weiteren Ladungsspeicher C1, C2. Wenn die Ladespannung über dem Ladungsspeicher C2 eine Schaltspannungsschwelle der Schaltfunkenstrecke SF überschreitet, wird diese über die Diode D4 gezündet und stellt im gezündeten Zustand eine niederohmige Verbindung dar. Dementsprechend ist der Ladungsspeicher C1 kurzgeschlossen beziehungsweise niederohmig überbrückt, sodass in der Primärwicklung T11 des Hochspannungstransformators T1 ein Spannungspuls generiert wird, welcher auf der Sekundärseite T12 hochtransformiert zu einem Hochspannungspuls an der triggerbaren Funkenstrecke TF führt, insbesondere zwischen der Triggerelektrode TE und der dargestellten Hauptelektrode HE.

Dieser Spannungsimpuls führt dann zu einem Triggern, beziehungsweise Zünden der Funkenstrecke TF. Das Zünden der Funkenstrecke TF durch die Triggerelektrode TE bewirkt schließlich das Ausbilden eines leitenden Kanals zwischen der dargestellten Hauptelektrode HE und einer weiteren, nicht dargestellten Hauptelektrode der Funkenstrecke TF. Durch die Zeitkonstante, die aus einem Widerstandswert des Widerstands R1 und einer Kapazität des Ladungsspeichers C2 resultiert, und durch die vorgegebene Durchschaltspannung der Schaltfunkenstrecke SF ergibt sich eine vorgegebene Zeitspanne zwischen dem Auftreten eines Eingangsimpulses und dem daraus resultierenden Zünden der Funkenstrecke TF. Dementsprechend kann die dargestellte Funkenstreckenanordnung für Anwendungen vorgesehen werden, bei denen eine bestimmte Verzögerung zwischen Eingangsimpuls und Durchschalten der Funkenstrecke TF erforderlich beziehungsweise gewünscht ist.

Das zunächst allgemein beschriebene Funktionsprinzip der Funkenstreckenanordnung soll nun an einer Ausführungsform mit beispielhaft gewählten Bauteilwerten erläutert werden.

Beispielsweise ist der Transformator T2 derart dimensioniert, dass ein Eingangsimpuls mit einer Impulsspitze von größer 2 kV erzeugt werden kann. Die Dioden D1, D2, D3 sind beispielsweise mit einer Festigkeit von etwa 10 kV ausgelegt. Der Ladungsspeicher C3 ist beispielsweise als Kondensator mit einer Kapazität von 1 nF, der Ladungsspeicher C4 als Kondensator mit einer Kapazität von 10 nF ausgelegt. Der erste Widerstand R1 weist einen Wert von 47 kΩ auf, während der zweite Widerstand R3 einen Widerstandswert von 1 kΩ aufweist. Der Widerstand R2 ist beispielsweise mit 470 kΩ dimensioniert. Der Ladungsspeicher C2 ist durch einen Kondensator mit 1 nF Kapazität ausgeführt, während der Ladungsspeicher C1 als Kondensator mit 47 nF Kapazität ausgelegt ist.

Bei einem Eingangsimpuls mit einer Impulsspitze von größer 2 kV erfolgt über die Dioden D1, D2 eine unmittelbare Aufladung der Ladungsspeicher C3, C4 auf eine Ladespannung von etwa 2 kV. Durch die größere Kapazität des Ladungsspeichers C4 ist auf diesem eine größere Ladungsmenge gespeichert. Nach Ende des Eingangsimpulses erfolgt eine Umladung der auf den Ladungsspeichern C3, C4 gespeicherten Ladungen auf die Ladungsspeicher C1, C2. Durch den Widerstand R3, der kleiner als der Widerstand R1 ist, erfolgt eine Aufladung beziehungsweise Umladung des Ladungsspeichers C1 auf eine Ladespannung von etwa 400 V. Diese Ladespannung liegt insbesondere unterhalb einer Durchschaltspannung der Schaltfunkenstrecke SF.

Der Ladungsspeicher C3 wird über den ersten Widerstand R1 auf den Ladungsspeicher C2 umgeladen, wobei der Ladevorgang des Ladungsspeichers C2 langsamer vonstatten geht als der Ladevorgang des Ladungsspeichers C1. Wegen des geringeren Kapazitätswerts des Ladungsspeichers C2 kann dieser jedoch auf eine höhere Ladespannung aufgeladen werden, die insbesondere höher liegt als die Durchschaltspannung der Schaltfunkenstrecke SF, zumindest theoretisch. Wenn nämlich die momentane Ladespannung des Ladungsspeichers C2 diese Durchschaltspannung der Schaltfunkenstrecke SF erreicht, zündet diese und bildet eine niederohmige Strecke, welche die Serienschaltung aus der Primärwicklung T11, dem Ladungsspeicher C1 und der Diode D5 kurzschließt beziehungsweise niederohmig verbindet. Durch diese niederohmige Verbindung wird in der Primärwicklung T11 eine der Ladespannung des Ladungsspeichers C1 entsprechend große Spannung pulsförmig induziert, welche auf der Sekundärseite T12 zu einem Spannungspuls mit einer Pulsspitze von etwa 10 kV führt. Diese Pulsspitze triggert schließlich die Funkenstrecke TF.

Durch den Widerstand R2 wird der Ladungsspeicher C2 entladen, was sich insbesondere auswirkt, wenn kein Eingangsimpuls vorliegt. Bei einem Umladevorgang vom ersten Ladungsspeicher C3 ist der Entladestrom über den Widerstand R2 vernachlässigbar, insbesondere aufgrund des deutlich höheren Widerstandswerts des Widerstands R2. Durch die Entlademöglichkeit des Ladungsspeichers C2 wird verhindert, dass eventuelle Restladungen auf dem Ladungsspeicher C2 erhalten werden könnten, um so eine Zeit bis zum Auslösen der Schaltfunkenstrecke SF zu verkürzen. Dementsprechend wird durch den Widerstand R2 gewährleistet, dass eine definierte Zeitspanne zwischen Auftreten eines Eingangsimpulses und dem Abgeben eines Zündimpulses für die Funkenstrecke TF eingehalten wird. Diese Zeitspanne von beispielsweise 15 µs kann unter anderem durch die Höhe der Schaltspannung der Schaltfunkenstrecke SF und die Bauteilwerte der Elemente R1, C2 bestimmt sein.

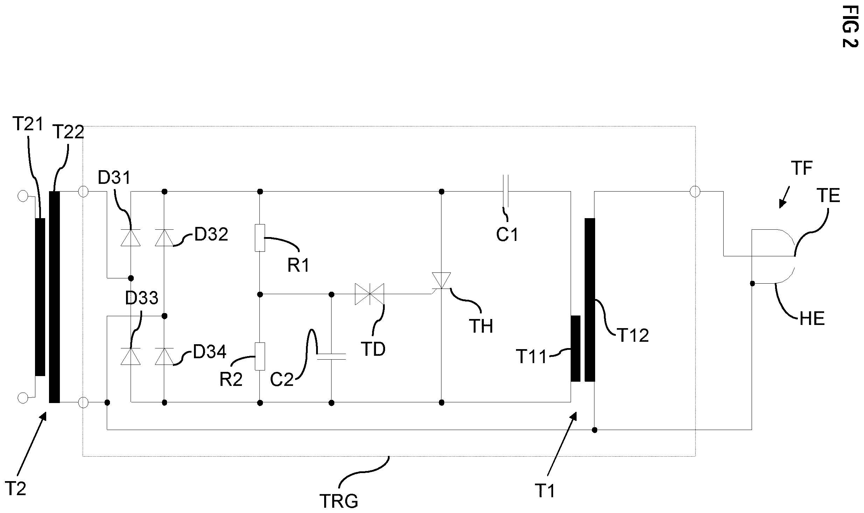

Figur 2 zeigt eine alternative Ausgestaltungsform der Funkenstreckenanordnung, bei der sich insbesondere die Ausführung der Triggerschaltung TRG von der in Figur 1 beschriebenen Ausführungsform unterscheidet. Die Triggerschaltung TRG der Figur 2 umfasst eingangsseitig einen Zweiwegegleichrichter mit Gleichrichterdioden D31, D32, D33, D34, die als Brückengleichrichter verschaltet sind. Am positiven Ausgang des Brückengleichrichters ist ein erster Ladungsspeicher C1 angeschlossen, dessen zweiter Anschluss mit der Primärwicklung T11 des Transformators T1 verbunden ist. Ferner ist an dem positiven Anschluss des Gleichrichters ein erster Widerstand R1 angeschlossen, der in Serie mit dem Widerstand R2 ebenfalls mit dem negativen Anschluss des Gleichrichters verbunden ist. Zwischen dem Widerstand R1 und dem negativen Anschluss des Gleichrichters ist ferner der zweite Ladungsspeicher C2 angeschlossen. Die Triggerschaltung TRG umfasst ferner einen Thyristor TH, der den positiven und den negativen Gleichrichteranschluss beziehungsweise den ersten Ladungsspeicher C1 mit dem unteren Anschluss der Primärwicklung T11 verbindet. Ein Triggeranschluss des Thyristors TH ist über eine Triggerdiode TD mit dem zweiten Ladungsspeicher C2 verbunden. Der untere Anschluss der Sekundärwicklung T12 des Transformators T1 ist zur Schaffung eines gemeinsamen Bezugspotentials mit dem unteren Anschluss der Sekundärwicklung T22 des Transformators T2 verbunden.

Im Betrieb der Funkenstreckenanordnung wird beispielsweise auf der Primärseite T21 des Transformators T12 ein Impuls angelegt, der auf der Sekundärseite T22 einen Eingangsimpuls induziert. Dieser weist beispielsweise wiederum lediglich eine Schwingungsperiode mit einer positiven und einer negativen Halbwelle auf, welche durch die Gleichrichtung mit den Gleichrichterdioden D31, D32, D33, D34 zur unmittelbaren Aufladung des beispielsweise als Kondensator ausgeführten Ladungsspeichers C1 führt. Dementsprechend wird die Energie des Eingangsimpulses zumindest teilweise auf dem ersten Ladungsspeicher C1 zwischengespeichert. Nach Ende des Eingangsimpulses entlädt sich der Ladungsspeicher C1 teilweise über den Widerstand R1 auf den Ladungsspeicher C2. Wenn die Ladespannung über dem zweiten Ladungsspeicher C2 eine Schaltspannungsschwelle der Triggerdiode TD überschreitet, schaltet diese durch und führt somit die Ladespannung des zweiten Ladungsspeichers C2 an den Steueranschluss des Thyristors TH.

Der Thyristor TH wird dementsprechend durch die Ladespannung des zweiten Ladungsspeichers C2 gezündet, sodass eine niederohmige Verbindung zwischen den ersten Ladungsspeicher C1 und dem unteren Anschluss der Primärwicklung T11 entsteht. Anders ausgedrückt ist der erste Ladungsspeicher C1 über den Thyristor TH und die Primärwicklung T11 kurzgeschlossen. Infolgedessen wird in der Primärwicklung T11 des Hochspannungstransformators T1 ein Spannungspuls generiert, welcher auf der Sekundärseite T12 hochtransformiert zu einem Hochspannungspuls an der triggerbaren Funkenstrecke TF führt, wie zuvor auch bei dem Ausführungsbeispiel der Figur 1 beschrieben. Dieser Spannungsimpuls führt dann wiederum zu einem Triggern beziehungsweise Zünden der Funkenstrecke TF.

Durch die Zeitkonstante, die aus einem Widerstandswert des Widerstands R1 und einer Kapazität des Ladungsspeichers C2 resultiert, und durch die Schaltspannungsschwelle des Thyristors TH beziehungsweise der Triggerdiode TD ergibt sich wiederum eine vorgegebene Zeitspanne zwischen dem Auftreten eines Eingangsimpulses am Transformator T2 und dem daraus resultierenden Zünden der Funkenstrecke TF. Folglich kann die dargestellte Funkenstreckenanordnung wiederum für Anwendungen vorgesehen werden, bei denen eine bestimmte Verzögerung zwischen Eingangsimpuls und Durchschalten der Funkenstrecke TF erforderlich beziehungsweise gewünscht ist. Ähnlich wie bei der zuvor beschriebenen Ausführungsform der Figur 1 dient auch hier der Widerstand R2 zum Entladen des Ladungsspeichers C2, was verhindert, dass eventuelle Restladungen auf dem zweiten Ladungsspeicher C2 erhalten werden könnten, um so eine Zeit bis zum Kurzschließen des Ladungsspeichers C1 zu verkürzen. Dementsprechend wird durch den Widerstand R2 gewährleistet, dass eine definierte Zeitspanne zwischen Auftreten eines Eingangsimpulses und dem Abgeben eines Zündimpulses für die Funkenstrecke TF eingehalten wird, welche beispielsweise bei 15 µs liegt.

Beispielsweise weist der erste Ladungsspeicher C1 eine Kapazität von 470 nF auf, während der zweite Ladungsspeicher C2 eine Kapazität von 5 nF aufweist. Der erste Widerstand R1 ist beispielsweise mit 22 kΩ dimensioniert. Das Dimensionierungsverhältnis zwischen erstem und zweitem Ladungsspeicher C1, C2 beträgt vorliegend somit etwa den Faktor 100. Dadurch wird gewährleistet, dass bei einem Umladen von Energie vom ersten Ladungsspeicher C1 auf den zweiten Ladungsspeicher C2 über den Widerstand R1 nur ein kleiner Teil der Energie, die vom Eingangsimpuls zwischengespeichert ist, auf den zweiten Ladungsspeicher C2 umgeladen wird. Diese Energie reicht jedoch wegen der geringeren Kapazität des zweiten Ladungsspeichers C2 aus, um die für das Durchzünden des Thyristors TH notwendige Schaltspannung zu erreichen. Zudem verbleibt auf den ersten Ladungsspeicher C1 eine ausreichende Ladungsmenge beziehungsweise Spannung, um beim Kurzschluss über den Thyristor TH einen ausreichenden Spannungsimpuls im Hochspannungstransformator T1 zu erzeugen. Im Unterschied zu der in Figur 1 dargestellten Ausführungsform dient der erste Ladungsspeicher C1 in der Ausführungsform der Figur 2 sowohl zum Speichern der Energie, die für das Durchführen der Zeitverzögerung infolge der Umladung benötigt wird, als auch zum Speichern der Zündenergie für den Hochspannungstransformator T1.

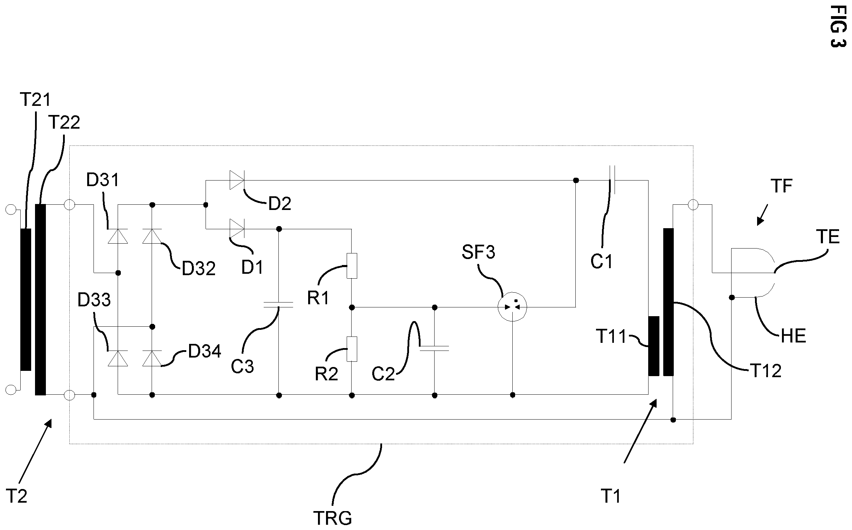

Figur 3 zeigt eine weitere alternative Ausführungsform einer Funkenstreckenanordnung, welche eine Abwandlung der in Figur 2 dargestellten Ausführungsform bildet. Wiederum ist am Eingang der Triggerschaltung TRG eine Gleichrichterbrücke mit Gleichrichterdioden D31, D32, D33, D34 vorgesehen. Neben dem ersten Ladungsspeicher C1, der über eine Diode D2 mit dem positiven Ausgang des Gleichrichters verbunden ist, ist ein weiterer Ladungsspeicher C3 vorgesehen, der über eine Diode D1 mit dem positiven Anschluss der Gleichrichterbrücke verbunden ist. An einen Verbindungsknoten der Diode D1 und des Ladungsspeichers C3 ist der Widerstand R1 angeschlossen, wobei ein zweiter Anschluss des Widerstands R1 über eine Parallelschaltung des Widerstands R2 und des zweiten Ladungsspeichers C2 mit dem negativen Anschluss des Gleichrichters verbunden ist.

Die Triggerschaltung TRG umfasst zudem einen Dreielektrodenableiter SF3, dessen erste Außenelektrode mit dem Verbindungsknoten der Widerstände R1, R2 beziehungsweise dem Verbindungsknoten des Widerstands R1 mit dem zweiten Ladungsspeicher C2 verbunden ist, dessen zweite Außenelektrode mit dem Verbindungsknoten der Diode D2 und des ersten Ladungsspeichers C1 verbunden ist, und dessen Mittelelektrode mit dem negativen Anschluss des Gleichrichters beziehungsweise dem unteren Anschluss der Primärwicklung T11 des Hochspannungstransformators T1 verbunden ist.

Im Betrieb der Anordnung wird wiederum ein am Transformator T2 anliegender Eingangsimpuls gleichgerichtet und über die in Durchlassrichtung geschalteten Dioden D1, D2 zur unmittelbaren Aufladung der Ladungsspeicher C1, C3 verwendet. Ein Umladen zwischen den Ladungsspeichern C1, C3 wird durch die Polung der Dioden D1, D2 verhindert. Die Energie des Eingangsimpulses wird somit sowohl auf dem ersten Ladungsspeicher C1 als auch auf dem dritten Ladungsspeicher C3 zwischengespeichert. Nach Ende des Eingangsimpulses wird der dritte Ladungsspeicher C3 zumindest teilweise über den Widerstand R1 auf den zweiten Ladungsspeicher C2 umgeladen, sodass dessen Ladespannung entsprechend der aus dem Widerstands- beziehungsweise Kapazitätswert resultierenden Zeitkonstante ansteigt.

Beim Erreichen einer entsprechenden Schaltspannung des Dreielektrodenableiters SF3 zwischen der entsprechenden Außenelektrode und der Mittelelektrode wird der Dreielektrodenableiter SF3 zum Zünden gebracht, sodass auch die Strecke zwischen der Mittelelektrode und der anderen Außenelektrode, die mit dem Ladungsspeicher C1 verbunden ist, niederohmig wird. Folglich wird der Ladungsspeicher C1 über den Dreielektrodenableiter SF3 und die Primärwicklung T11 des Hochspannungstransformators T1 kurzgeschlossen und entladen, sodass wiederum auf der Sekundärseite T12 ein Hochspannungsimpuls induziert wird, der zum Zünden der triggerbaren Funkenstrecke TF führt. Die Funktion des Widerstands R2 entspricht den vorherigen Ausführungsbeispielen.

Der erste Ladungsspeicher C1 weist in dieser Ausführungsform beispielsweise eine Kapazität von 470 nF auf, während der zweite und der dritte Ladungsspeicher C2, C3 jeweils eine Kapazität von 1 nF aufweisen. Der erste Widerstand R1 ist beispielsweise mit 47 kΩ dimensioniert. Die Spannungsverhältnisse und insbesondere die Größenordnungen der Spannungen entsprechen denen des Ausführungsbeispiels der Figur 1.

Wie bei den zuvor beschriebenen Ausführungsbeispielen wird durch die Zwischenspeicherung der Energie des Eingangsimpulses, hier auf dem Ladungsspeicher C3, und das Umladen auf den zweiten Ladungsspeicher C2 über einen Widerstand R1 eine verzögerte Triggerung der Funkenstrecke TF erreicht.

In verschiedenen Ausführungsformen kann bei den oben beschriebenen Ausführungsbeispielen der Figuren 1 bis 3 parallel zur Primärwicklung T11 des Hochspannungstransformators T1 eine Diode geschaltet werden. Insbesondere ist eine Anode dieser Diode mit dem oberen Anschluss der Primärwicklung T11 beziehungsweise dem ersten Ladungsspeicher C1 verbunden, während die Kathode mit dem unteren Anschluss der Primärwicklung T11 verbunden ist. Dadurch wird beispielsweise verhindert, dass bei steilen Eingangsimpulsen am Transformator T2 durch die Aufladung des ersten Ladungsspeichers C1 ein Impuls im Hochspannungstransformator T1, in umgekehrter Polarität, induziert wird. Bei der beabsichtigten Entladung des ersten Ladungsspeichers C1 ist die zusätzliche Diode dann in Sperrrichtung, so dass sich das zuvor beschriebene Verhalten einstellt.

Die triggerbare Funkenstrecke der beschriebenen Ausführungsformen ist beispielsweise mit Elektroden in einem Keramikgehäuse ausgeführt, welches insbesondere zwischen den Hauptelektroden mit Gas gefüllt ist. Jedoch sind auch andere Ausführungsformen von herkömmlichen triggerbaren Funkenstrecken verwendbar. Vorzugsweise ist die Triggerschaltung in ein Gehäuse der triggerbaren Funkenstrecke integriert, sodass insbesondere ein Anschluss der Triggerelektrode TE nicht von außerhalb des Gehäuses unmittelbar kontaktierbar ist. Vielmehr sind beispielsweise lediglich die Eingangsanschlüsse der Triggerschaltung TRG oder des eingangsseitig vorgesehenen Transformators T2 sowie die Hauptelektroden von außerhalb des Gehäuses kontaktierbar.

Eine Funkenstreckenanordnung gemäß einem der beschriebenen Ausführungsbeispiele kann beispielsweise in medizinischen Geräten verwendet werden, welche das Durchschalten von hohen Spannungen erfordern. Beispielsweise ist eine solche Funkenstreckenanordnung in einem Nierenzertrümmerungsgerät eingesetzt.

## Patentansprüche

1. Funkenstreckenanordnung mit einer triggerbaren Funkenstrecke (TF) und einer Triggerschaltung (TRG), die einen ersten und einen zweiten Ladungsspeicher (C1, C2), einen ersten Widerstand (R1), ein triggerbares Ableitelement (SF, SF3, TD, TH) und einen Transformator (T1) umfasst, die Triggerschaltung (TRG) eingerichtet
- die Energie eines der Triggerschaltung (TRG) eingangsseitig zugeführten Eingangsimpulses zwischenzuspeichern, wobei eine Speicherung wenigstens durch den ersten Ladungsspeicher (C1) erfolgt; und
- einen Teil der gespeicherten Energie über den ersten Widerstand (R1) auf den zweiten Ladungsspeicher (C2) umzuladen;
- wobei das triggerbare Ableitelement (SF, SF3, TD, TH) eingerichtet ist, in Abhängigkeit einer Spannung über dem zweiten Ladungsspeicher (C2) durchzuschalten und den ersten Ladungsspeicher (C1) über eine Primärseite (T11) des Transformators (T1) zu entladen; und
- wobei eine Sekundärseite (T12) des Transformators (T1) mit einer Hauptelektrode (HE) der triggerbaren Funkenstrecke (TF) und einer Triggerelektrode (TE) der triggerbaren Funkenstrecke (TF) verbunden ist.

2. Funkenstreckenanordnung nach Anspruch 1,
bei der die Speicherung der Energie des Eingangsimpulses ausschließlich durch den ersten Ladungsspeicher (C1) erfolgt, wobei die Triggerschaltung (TRG) eingerichtet ist, den ersten Ladungsspeicher (C1) über den ersten Widerstand (R1) teilweise zu entladen, um den zweiten Ladungsspeicher (C2) aufzuladen.

3. Funkenstreckenanordnung nach Anspruch 2,
bei der das triggerbare Ableitelement (TD, TH) eine Triggerdiode (TD) und einen Thyristor (TH) umfasst, wobei die Triggerdiode (TD) eingerichtet ist, den Thyristor (TH) in Abhängigkeit der Spannung über dem zweiten Ladungsspeicher (C2) leitend zu schalten.

4. Funkenstreckenanordnung nach Anspruch 1,
bei der die Triggerschaltung (TRG) ferner einen dritten Ladungsspeicher (C3) umfasst, wobei die Speicherung der Energie des Eingangsimpulses durch den ersten Ladungsspeicher (C1) und den dritten Ladungsspeicher (C3) erfolgt, und wobei die Triggerschaltung (TRG) eingerichtet ist, den dritten Ladungsspeicher (C3) über den ersten Widerstand (R1) zu entladen, um den zweiten Ladungsspeicher (C2) aufzuladen.

5. Funkenstreckenanordnung nach Anspruch 4,
bei der die Triggerschaltung (TRG) eingerichtet ist, den ersten Ladungsspeicher (C1) und den dritten Ladungsspeicher (C3) direkt durch den Eingangsimpuls aufzuladen.

6. Funkenstreckenanordnung nach Anspruch 5,
bei der das triggerbare Ableitelement (SF3) einen Dreielektrodenableiter (SF3) umfasst, bei dem eine Mittelelektrode zum Durchschalten des Dreielektrodenableiters (SF3) in Abhängigkeit der Spannung über dem zweiten Ladungsspeicher (C2) eingerichtet ist.

7. Funkenstreckenanordnung nach Anspruch 4,
bei der die Triggerschaltung (TRG) ferner einen vierten Ladungsspeicher (C4) und einen zweiten Widerstand (R3) umfasst, wobei die Triggerschaltung (TRG) eingerichtet ist, den dritten und den vierten Ladungsspeicher (C3, C4) direkt durch den Eingangsimpuls aufzuladen, und den vierten Ladungsspeicher (C4) über den zweiten Widerstand (R3) zu entladen, um den ersten Ladungsspeicher (C1) aufzuladen.

8. Funkenstreckenanordnung nach Anspruch 7,
bei der das triggerbare Ableitelement (SF) eine Schaltfunkenstrecke (SF) umfasst, die zum Durchschalten in Abhängigkeit der Spannung über dem zweiten Ladungsspeicher (C2) eingerichtet ist.

9. Funkenstreckenanordnung nach einem der Ansprüche 1 bis 8, bei der die Triggerschaltung (TRG) eine Gleichrichterschaltung (D3, D31, D32, D33, D34) aufweist, die eingerichtet ist, die Speicherung der Energie des Eingangsimpulses auf der Basis einer positiven Halbwelle und/oder einer negativen Halbwelle des Eingangsimpulses zu ermöglichen.

10. Funkenstreckenanordnung nach einem der Ansprüche 1 bis 9, bei der ein weiterer Widerstand (R2) parallel zum zweiten Ladungsspeicher (C2) geschaltet ist.

11. Funkenstreckenanordnung nach einem der Ansprüche 1 bis 10, bei der die Triggerschaltung (TRG) in ein Gehäuse der triggerbaren Funkenstrecke (TF) integriert ist.

12. Funkenstreckenanordnung nach einem der Ansprüche 1 bis 11, bei der der Transformator (T1) als Hochspannungstransformator ausgeführt ist.

13. Funkenstreckenanordnung nach einem der Ansprüche 1 bis 12, ferner umfassend einen weiteren Transformator (T2), der eingerichtet ist, den Eingangsimpuls aus einem primärseitig am weiteren Transformator (T2) anliegenden Impuls zu erzeugen.

14. Funkenstreckenanordnung nach einem der Ansprüche 1 bis 13, bei der die triggerbare Funkenstrecke (TF) eine Gasentladungsfunkenstrecke oder ein gasgefüllter elektrischer Überspannungsableiter ist.

15. Funkenstreckenanordnung nach einem der Ansprüche 1 bis 14, bei der die Triggerschaltung (TRG) derart dimensioniert ist, dass eine Zeitspanne zwischen einem Auftreten des Eingangsimpulses und dem Durchschalten des triggerbaren Ableitelements (SF, SF3, TD, TH) immer größer als ein vorgegebener Wert, insbesondere größer als 15 µs ist.

## Claims

1. Spark gap arrangement having a triggerable spark gap (TF) and a trigger circuit (TRG), which comprises a first and a second charge store (C1, C2), a first resistor (R1), a triggerable dissipation element (SF, SF3, TD, TH) and a transformer (T1), the trigger circuit (TRG) being set up
- to intermediately store the energy of an input pulse supplied to the input side of the trigger circuit (TRG), wherein storage takes place at least by means of the first charge store (C1); and
- to transfer a part of the stored energy to the second charge store (C2) via the first resistor (R1);
- wherein the triggerable dissipation element (SF, SF3, TD, TH) is set up to turn on on the basis of a voltage across the second charge store (C2) and to discharge the first charge store (C1) via a primary side (T11) of the transformer (T1); and
- wherein a secondary side (T12) of the transformer (T1) is connected to a main electrode (HE) of the triggerable spark gap (TF) and to a trigger electrode (TE) of the triggerable spark gap (TF).

2. Spark gap arrangement according to Claim 1,
in which the storage of the energy of the input pulse takes place exclusively by means of the first charge store (C1), wherein the trigger circuit (TRG) is set up to partially discharge the first charge store (C1) via the first resistor (R1) in order to charge the second charge store (C2).

3. Spark gap arrangement according to Claim 2,
in which the triggerable dissipation element (TD, TH) comprises a trigger diode (TD) and a thyristor (TH), wherein the trigger diode (TD) is set up to switch the thyristor (TH) so as to conduct on the basis of the voltage across the second charge store (C2).

4. Spark gap arrangement according to Claim 1,
in which the trigger circuit (TRG) also comprises a third charge store (C3), wherein the storage of the energy of the input pulse takes place via the first charge store (C1) and the third charge store (C3), and wherein the trigger circuit (TRG) is set up to discharge the third charge store (C3) via the first resistor (R1) in order to charge the second charge store (C2).

5. Spark gap arrangement according to Claim 4,
in which the trigger circuit (TRG) is set up to charge the first charge store (C1) and the third charge store (C3) directly by means of the input pulse.

6. Spark gap arrangement according to Claim 5,
in which the triggerable dissipation element (SF3) comprises a three-electrode arrester (SF3), in which a central electrode is set up to turn on the three-electrode arrester (SF3) on the basis of the voltage across the second charge store (C2).

7. Spark gap arrangement according to Claim 4,
in which the trigger circuit (TRG) also comprises a fourth charge store (C4) and a second resistor (R3), wherein the trigger circuit (TRG) is set up to charge the third and the fourth charge stores (C3, C4) directly by means of the input pulse, and to discharge the fourth charge store (C4) via the second resistor (R3) in order to charge the first charge store (C1).

8. Spark gap arrangement according to Claim 7,
in which the triggerable dissipation element (SF) comprises a switching spark gap (SF) which is set up to turn on on the basis of the voltage across the second charge store (C2).

9. Spark gap arrangement according to any of Claims 1 to 8,
in which the trigger circuit (TRG) has a rectifier circuit (D3, D31, D32, D33, D34) which is set up to enable the storage of the energy of the input pulse on the basis of a positive half-cycle and/or a negative half-cycle of the input pulse.

10. Spark gap arrangement according to any of Claims 1 to 9,
in which a further resistor (R2) is connected in parallel with the second charge store (C2).

11. Spark gap arrangement according to any of Claims 1 to 10, in which the trigger circuit (TRG) is integrated into a housing of the triggerable spark gap (TF).

12. Spark gap arrangement according to any of Claims 1 to 11, in which the transformer (T1) is embodied as a high-voltage transformer.

13. Spark gap arrangement according to any of Claims 1 to 12, also comprising a further transformer (T2) which is set up to generate the input pulse from a pulse present at a primary side of the further transformer (T2).

14. Spark gap arrangement according to any of Claims 1 to 13, in which the triggerable spark gap (TF) is a gas-discharge spark gap or a gas-filled electrical surge arrester.

15. Spark gap arrangement according to any of Claims 1 to 14, in which the trigger circuit (TRG) is dimensioned such that a time interval between the appearance of the input pulse and the turning-on of the triggerable dissipation element (SF, SF3, TD, TH) is always greater than a predefined value, in particular is greater than 15 µs.

## Revendications

1. Arrangement éclateur comprenant un éclateur déclenchable (TF) et un circuit déclencheur (TRG), lequel comporte un premier et un deuxième accumulateur de charge (C1, C2), une première résistance (R1), un élément de décharge déclenchable (SF, SF3, TD, TH) et un transformateur (T1), le circuit déclencheur (TRG) étant conçu pour
- accumuler temporairement l'énergie d'une impulsion d'entrée acheminée du côté de l'entrée du circuit déclencheur (TRG), une accumulation s'effectuant au moins par le premier accumulateur de charge (C1) ; et
- décharger une partie de l'énergie accumulée sur le deuxième accumulateur de charge (C2) par le biais de la première résistance (R1) ;
- l'élément de décharge déclenchable (SF, SF3, TD, TH) étant conçu pour commuter à l'état passant en fonction d'une tension du deuxième accumulateur de charge (C2) et décharger le premier accumulateur de charge (C1) par le biais d'un côté primaire (T11) du transformateur (T1) ; et
- un côté secondaire (T12) du transformateur (T1) étant relié à une électrode principale (HE) de l'éclateur déclenchable (TF) et une électrode de déclenchement (TE) de l'éclateur déclenchable (TF).

2. Arrangement éclateur selon la revendication 1, dans lequel l'accumulation de l'énergie de l'impulsion d'entrée s'effectue exclusivement par le premier accumulateur de charge (C1), le circuit déclencheur (TRG) étant conçu pour décharger partiellement le premier accumulateur de charge (C1) par le biais de la première résistance (R1) afin de charger le deuxième accumulateur de charge (C2).

3. Arrangement éclateur selon la revendication 2, dans lequel l'élément de décharge déclenchable (TD, TH) comporte une diode de déclenchement (TD) et thyristor (TH), la diode de déclenchement (TD) étant conçue pour commuter le thyristor (TH) à l'état passant en fonction de la tension aux bornes du deuxième accumulateur de charge (C2).

4. Arrangement éclateur selon la revendication 1, dans lequel le circuit déclencheur (TRG) comporte en outre un troisième accumulateur de charge (C3), l'accumulation de l'énergie de l'impulsion d'entrée s'effectuant par le premier accumulateur de charge (C1) et le troisième accumulateur de charge (C3), et le circuit déclencheur (TRG) étant conçu pour décharger le troisième accumulateur de charge (C3) par le biais de la première résistance (R1) afin de charger le deuxième accumulateur de charge (C2).

5. Arrangement éclateur selon la revendication 4, dans lequel le circuit déclencheur (TRG) est conçu pour charger le premier accumulateur de charge (C1) et le troisième accumulateur de charge (C3) directement par l'impulsion d'entrée.

6. Arrangement éclateur selon la revendication 5, dans lequel l'élément de décharge déclenchable (SF3) comprend un semiconducteur à trois électrodes (SF3), dans lequel une électrode centrale est conçue pour commuter le semiconducteur à trois électrodes (SF3) à l'état passant en fonction de la tension aux bornes du deuxième accumulateur de charge (C2).

7. Arrangement éclateur selon la revendication 4, dans lequel le circuit déclencheur (TRG) comporte en outre un quatrième accumulateur de charge (C4) et une deuxième résistance (R3), le circuit déclencheur (TRG) étant conçu pour charger le troisième et le quatrième accumulateur de charge (C3, C4) directement par l'impulsion d'entrée et pour décharger le quatrième accumulateur de charge (C4) par le biais de la deuxième résistance (R3) afin de charger le premier accumulateur de charge (C1).

8. Arrangement éclateur selon la revendication 7, dans lequel l'élément de décharge déclenchable (SF) comporte un éclateur commutable (SF) qui est conçu pour commuter à l'état passant en fonction de la tension aux bornes du deuxième accumulateur de charge (C2).

9. Arrangement éclateur selon l'une des revendications 1 à 8, dans lequel le circuit déclencheur (TRG) possède un circuit redresseur (D3, D31, D32, D33, D34) qui est conçu pour rendre possible l'accumulation de l'énergie de l'impulsion d'entrée sur la base d'une demi-onde positive et/ou d'une demi-onde négative de l'impulsion d'entrée.

10. Arrangement éclateur selon l'une des revendications 1 à 9, dans lequel une résistance supplémentaire (R2) est branchée en parallèle avec le deuxième accumulateur de charge (C2).

11. Arrangement éclateur selon l'une des revendications 1 à 10, dans lequel le circuit déclencheur (TRG) est intégré dans un boîtier de l'éclateur déclenchable (TF).

12. Arrangement éclateur selon l'une des revendications 1 à 11, dans lequel le transformateur (T1) est réalisé sous la forme d'un transformateur à haute tension.

13. Arrangement éclateur selon l'une des revendications 1 à 12, comprenant en outre un transformateur supplémentaire (T2) qui est conçu pour générer l'impulsion d'entrée à partir d'une impulsion appliquée sur le côté primaire du transformateur supplémentaire (T2).

14. Arrangement éclateur selon l'une des revendications 1 à 13, dans lequel l'éclateur déclenchable (TF) est un éclateur à décharge gazeuse ou un parasurtenseur électrique rempli de gaz.

15. Arrangement éclateur selon l'une des revendications 1 à 14, dans lequel le circuit déclencheur (TRG) est dimensionné de telle sorte qu'un intervalle de temps entre une apparition de l'impulsion d'entrée et la commutation à l'état passant de l'élément de décharge déclenchable (SF, SF3, TD, TH) est toujours supérieur à une valeur prédéfinie, notamment supérieur à 15 µs.
